(19) Europäisches Patentamt
European Patent Office
Office européen des brevets

(11) EP 4 586 340 A1

(12) EUROPEAN PATENT APPLICATION
published in accordance with Art. 153(4) EPC

(43) Date of publication:
16.07.2025 Bulletin 2025/29

(51) International Patent Classification (IPC):
H01M 4/58 (2010.01)          H01M 4/36 (2006.01)
H01M 4/136 (2010.01)         H01M 4/1397 (2010.01)
H01M 10/052 (2010.01)        H01M 4/02 (2006.01)

(21) Application number: 23883147.3

(22) Date of filing: 26.10.2023

(52) Cooperative Patent Classification (CPC):
H01M 10/052; H01M 4/131; H01M 4/136;
H01M 4/36; H01M 4/525; H01M 4/58;
H01M 4/5825; H01M 4/62; H01M 4/625;
H01M 10/0525; H01M 2004/021; H01M 2004/028;
Y02E 60/10; Y02P 70/50

(86) International application number:
PCT/KR2023/016801

(87) International publication number:
WO 2024/091042 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.10.2022 KR 20220139140

(71) Applicant: LG Energy Solution, Ltd.
Seoul 07335 (KR)

(72) Inventors:
• KANG, Joon Hyeon
  Daejeon 34122 (KR)
• NA, Sang Mun
  Daejeon 34122 (KR)
• KWON, O Jong
  Daejeon 34122 (KR)
• HAN, Geum Jae
  Daejeon 34122 (KR)

(74) Representative: Hoffmann Eitle
Patent- und Rechtsanwälte PartmbB
Arabellastraße 30
81925 München (DE)

(54) LITHIUM SECONDARY BATTERY

(57) The present invention pertains to a lithium secondary battery and a method for manufacturing same. The lithium secondary battery comprises: a positive electrode; a negative electrode; a separator disposed between the positive electrode and the negative electrode; and an electrolyte, wherein the positive electrode includes a lithium iron phosphate-based active material having an Amorphous-content Index (AI) defined by equation (1) of 0.28 or less, preferably 0.20-0.28, and more preferably 0.20-0.27.

[FIG. 1]

EP 4 586 340 A1

**Description**

**FIELD OF THE INVENTION**

The present invention relates to a lithium secondary battery, and more particularly, to a lithium secondary battery including a lithium iron phosphate-based compound as a positive electrode active material.

**BACKGROUND ART**

A lithium secondary battery is generally manufactured by interposing a separator between a positive electrode including a positive electrode active material and a negative electrode including a negative electrode active material to form an electrode assembly, inserting the electrode assembly into a battery case, and then injecting a non-aqueous electrolyte, which is a medium for transferring lithium ions, into the battery case, followed by sealing the battery case. The non-aqueous electrolyte is generally composed of a lithium salt, and an organic solvent capable of dissolving the lithium salt.

As a positive electrode active material of a lithium secondary battery, a lithium cobalt-based oxide, a lithium manganese-based oxide, a lithium iron phosphate-based compound, a lithium nickel-cobalt-manganese-based oxide, a lithium nickel-cobalt-aluminum-based oxide, or the like is used. Among the above, the lithium iron phosphate-based compound has excellent thermal stability, thereby having excellent lifespan properties and safety, and is inexpensive, and thus is widely used as a positive electrode active material of a lithium secondary battery. However, there is a problem in that the lithium iron phosphate-based compound has a low energy density compared to other positive electrode active materials, and thus has poor capacity properties.

In addition, there is a problem in that the stoichiometry or impurity content in lithium iron phosphate-based compound varies depending on the initial synthesis state or storage state of the lithium iron phosphate-based compound, and accordingly, there are deviations in the initial charge capacity and lifespan properties when applied to batteries, resulting in poor quality uniformity.

Further, there is a problem that the amount of amorphous phase material in lithium iron phosphate is unpredictable and is not well controlled during manufacturing. For example, amorphous content of lithium iron phosphate may vary even among batches of the same lithium iron phosphate material, made using the same process, from the same manufacturer. Accordingly, properties and performance of lithium iron phosphate can be inconsistent, making the material difficult to use in an electrode or battery production process where repeatability and uniform quality is essential.

**DISCLOSURE OF THE INVENTION**

**TECHNICAL PROBLEM**

The present invention is for solving the above problems and provides a lithium secondary battery having excellent capacity properties by applying a lithium iron phosphate-based active material satisfying a specific range of an AI index, which represents a content ratio of an amorphous phase in a lithium iron phosphate-based compound.

In addition, the present invention provides a method for manufacturing a lithium secondary battery, the method capable of securing electrochemical properties and quality uniformity of a lithium secondary battery by measuring an amorphous content index of a lithium iron phosphate-based active material through a specific method, and selecting and applying a lithium iron phosphate-based active material satisfying a specific range of the amorphous content index.

**TECHNICAL SOLUTION**

According to an aspect of the present invention, there is provided a lithium secondary battery including a positive electrode, a negative electrode, a separator interposed between the positive electrode and the negative electrode, and an electrolyte, wherein the positive electrode includes a lithium iron phosphate-based active material having an amorphous-content index (AI) of 0.28 or less, preferably 0.20 to 0.28, and more preferably 0.20 to 0.27, or most preferably 0.22 to 0.25, as defined by Equation (1) below.

$$AI = \frac{I_{MgO}^{2\theta=43}}{\sum_{2\theta=15}^{36} I_{LFP}^{2\theta}}$$

Equation (1):

In Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the $\sum_{2\theta=15}^{36} I_{LFP}^{2\theta}$ is the sum of peak areas in the range of $2\theta = 15°$ to $36°$ in the X-ray diffraction analysis graph of the sample.

At this time, the lithium iron phosphate-based active material may comprise lithium iron phosphate-based compound represented by [Formula 1] below.

[Formula 1] $\qquad$ $Li_{1-a}[Fe_{1-x}M_x]_{1-y}PO_{4-b}A_b$

In Formula 1 above, M is any one or more selected from the group consisting of Mn, Ni, Co, Cu, Sc, Ti, Cr, V, and Zn, A is any one or more selected from the group consisting of S, Se, F, Cl, and I, $-0.5<a<0.5$, $0\leq x<1$, $-0.5<y<0.5$, and $0\leq b\leq 0.1$.

In addition, the lithium iron phosphate-based compound may have a molar ratio of Li to Fe and M (Li/(Fe+M)) of 1.0 to 1.1, preferably 1.05 to 1.09, and more preferably 1.06 to 1.085. In addition, the lithium iron phosphate-based compound may have a molar ratio of P to Fe and M (P/(Fe+M)) of 1.01 to 1.04, preferably 1.02 to 1.04.

In addition, the lithium iron phosphate-based compound may further include a conductive coating layer.

According to another aspect of the present invention, there is provided a method for manufacturing a lithium secondary battery, the method including steps of preparing a sample in which a lithium iron phosphate-based active material and MgO are mixed at a weight ratio of 70 : 30, measuring an AI value defined by Equation (1) below by X-ray diffraction analysis of the sample, selecting, as a positive electrode active material, a lithium iron phosphate-based active material satisfying a pre-set range of the AI value, manufacturing a positive electrode including the selected positive electrode active material, manufacturing an electrode assembly including the positive electrode, a separator, and a negative electrode, and accommodating the electrode assembly in a battery case, and then injecting an electrolyte into the battery case.

$$Equation\ (1)$$

$$AI = \frac{I_{MgO}^{2\theta=43}}{\sum\limits_{2\theta=15}^{36} I_{LFP}^{2\theta}}$$

In Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the $\sum_{2\theta=15}^{36} I_{LFP}^{2\theta}$ is the sum of peak areas in the range of $2\theta = 15°$ to $36°$ in the X-ray diffraction analysis graph of the sample.

Meanwhile, the pre-set range may be 0.28 or less, preferably 0.20 to 0.28, more preferably 0.2 to 0.27, and most preferably 0.22 to 0.25.

## ADVANTAGEOUS EFFECTS

The present invention uses, as a positive electrode active material, a lithium iron phosphate-based compound satisfying a specific range of an amorphous content index AI defined by Equation (1), thereby controlling non-uniformity of lithium iron phosphate-based active materials, and improving the capacity properties of an LFP battery.

In addition, a method for manufacturing a lithium secondary battery of the present invention is characterized by measuring an amorphous content index AI of a lithium iron phosphate-based active material through a specific method, and selecting and applying a lithium iron phosphate-based compound satisfying a specific range of the amorphous content index as a positive electrode active material. Meanwhile, the amorphous content index AI according to the present invention is a value measured by preparing a sample by mixing a lithium iron phosphate-based active material and MgO at a weight ratio of 70 : 30, and then comparing the peak intensity (area) of a graph obtained by X-ray diffraction analysis of the sample, wherein unlike a spike method, which has been typically performed to analyze the amorphous content in a crystal structure, the deviation according to samples or the number of trials is small, and the reproducibility and discrimination are excellent. Therefore, by using the amorphous content index AI defined in the present invention, it is possible to manufacture a secondary battery having uniform and excellent quality without having to go through a cumbersome process of manufacturing a cell and directly measuring the performance of the cell.

## BRIEF DESCRIPTION OF THE DRAWINGS

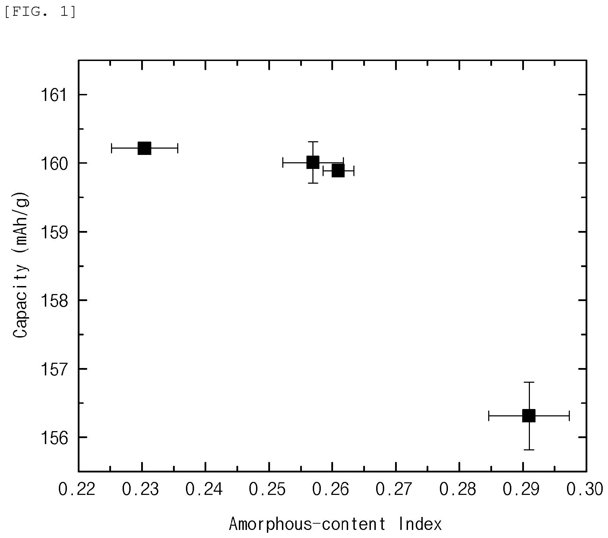

FIG. 1 is a graph showing the initial charge capacity of a lithium secondary battery according to an amorphous content index AI.

## BEST MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present disclosure, the term "lithium iron phosphate" refers to $LiFePO_4$. Meanwhile, the term "lithium iron phosphate-based compound" refers to a compound comprising lithium, iron, and phosphate, but also potentially including various other elements and/or dopants, such as in Formula 1, disclosed herein. The term "lithium iron phosphate-based active material" refers to a finished active material including lithium iron phosphate and/or a lithium iron phosphate-based compound, which may potentially further include additional compositional or structural components, such as a coating layer.

In the present specification, the term "primary particle" refers to a particle unit in which grain boundaries do not exist in appearance when observed in a range of vision of 5000 times to 20000 times using a scanning electron microscope. The term "average particle diameter of primary particles" refers to an arithmetic mean value calculated after measuring particle diameters of the primary particles observed in a scanning electron microscope image.

In the present specification, the term "average particle diameter $D_{50}$" refers to a particle size based on 50% of a volume cumulative particle size distribution of positive electrode active material powder. The average particle diameter $D_{50}$ may be measured by a laser diffraction method. For example, positive electrode active material powder is dispersed in a dispersion medium, and then introduced into a commercially available laser diffraction particle size measurement device (e.g., Microtrac MT 3000) to be irradiated with an ultrasonic wave of about 28 kHz to an output of 60W. Thereafter, the average particle diameter may be measured by obtaining a volume cumulative particle size distribution graph, and then obtaining a particle size corresponding to 50% of a volume cumulative amount.

Hereinafter, the present invention will be described in detail.

An amorphous content of a positive electrode active material affects the energy density and/or lifespan properties of a lithium secondary battery. Further, amorphous content can be unpredictable, even among materials of the same chemical composition, produced in the same way. Therefore, when designing a lithium secondary battery cell, it is important to accurately identify the degree of amorphous content in the positive electrode active material, and to predict electrochemical performance.

Typically, in order to measure an amorphous content of a lithium iron phosphate-based compound, a spike method has been mainly used wherein an internal standard is introduced to a lithium iron phosphate-based compound, X-ray diffraction analysis is performed, and then Rietveld refinement analysis is performed to estimate an amorphous content. However, in the case of the spike analysis, calculated values vary depending on structural models and fitting parameters, and a deviation within a sample is large, making it difficult to obtain a reliable value. Therefore, typically, for quality management, a lithium secondary battery cell has been directly manufactured and then electrochemical properties thereof have been tested, which is cumbersome.

In order to develop a secondary battery (hereinafter, referred to as a 'LFP cell') to which a lithium iron phosphate-based active material having excellent capacity properties and quality uniformity is applied, the present inventors have performed numerous experiments, and as a result, have developed a novel amorphous content index (AI) which can represent an amorphous content of an lithium iron phosphate-based active material, and have found out that it is possible to manufacture an LFP cell having excellent initial capacity properties using the amorphous content index. The AI parameter of the present technology is distinct from the crystalline content of the lithium iron phosphate on its own. Rather, it is a parameter characteristic of a finished LFP active material, which may be influenced by and represent additional properties and structure of the active material, such as presence and/or content of a coating layer on the LFP, presence and/or content of impurities.

The amorphous content index AI may be defined by Equation (1) below.

$$AI = \frac{I_{MgO}^{2\theta=43}}{\sum_{2\theta=15}^{36} I_{LFP}^{2\theta}}$$

Equation (1):

In Equation (1) above, the $I_{MgO}^{2\theta=43}$ is a peak area appearing at $2\theta = 43° \pm 0.5°$ in an X-ray diffraction analysis graph of a sample in which a lithium iron phosphate-based active material and MgO are mixed at a weight ratio of 70 : 30, and the

$\sum_{2\theta=15}^{36} I_{LFP}^{2\theta}$ is the sum of peak areas in the range of $2\theta = 15°$ to $36°$ in the X-ray diffraction analysis graph of the sample. In addition, the MgO is a material close to 100% crystalline.

The amorphous content $W_{amorphrous}$ in the sample may be calculated as follows.

$$W_{amorphrous} = 100 - W_{crystal} = 100 - (W_{MgO} + W_{crystal, LFP}) = 100 - (W_{MgO} + W_{MgO} (W_{crystal, LFP}/W_{MgO}))$$

In the above equation, $W_{crystal}$ is the content of crystalline in a sample, $W_{crystal, LFP}$ is the content of crystalline in a lithium iron phosphate-based compound, and $W_{MgO}$ is the content of MgO. Meanwhile, MgO is 100% crystalline, whose weight is fixed at 30 wt%, and according to the above equation, $W_{amorphrous}$ increases as $W_{crystal, LFP}/W_{MgO}$ decreases. That is, the amorphous content $W_{amorphrous}$ in the sample has a negative correlation with $W_{crystal, LFP}/W_{MgO}$. Since MgO is 100% crystalline, the amorphous content in the sample corresponds to the amorphous content of the lithium iron phosphate-based compound.

Meanwhile, when the crystalline ratio in the lithium iron phosphate-based active material increases, the sum of peak areas representing crystalline lithium iron phosphate in an X-ray diffraction analysis graph, that is, $\sum_{2\theta=15}^{36} I_{LFP}^{2\theta}$

increases, and when $W_{MgO}$ increases, $I_{MgO}^{2\theta=43}$ increases. Therefore, $W_{crystal, LFP}/W_{MgO}$ is inversely proportional to $\frac{I_{MgO}^{2\theta=43}}{\sum_{2\theta=15}^{36} I_{LFP}^{2\theta}}$. As described above, $W_{amorphrous}$ has a negative correlation with $W_{crystal, LFP}/W_{MgO}$, and thus, has a positive correlation with $\frac{I_{MgO}^{2\theta=43}}{\sum_{2\theta=15}^{36} I_{LFP}^{2\theta}}$.

As such, since the amorphous content in the lithium iron phosphate-based active material has a positive correlation with $AI = \frac{I_{MgO}^{2\theta=43}}{\sum_{2\theta=15}^{36} I_{LFP}^{2\theta}}$ represented by Equation (1) above, the contents of amorphous phases in a lithium iron phosphate-based active material may be relatively compared by using the AI as an indicator.

Meanwhile, in the present invention, when calculating the AI, only peak areas appearing in the range of $2\theta = 15$ to $36°$, excluding peaks of a region overlapping peaks of MgO among lithium iron phosphate XRD peaks, are summed up, and only a (200) peak ($2\theta = 43°$) area appearing strongest among MgO peaks is used, so that the occurrence of errors due to peak duplication is minimized.

In addition, according to the studies of the present inventors, it has been found out that when a sample is formed by mixing 100% crystalline MgO at a 30 wt% content as an internal standard, result values have the smallest deviation and are most reliable. At this time, as the MgO, for example, ABCR's MgO having a purity of 99.95% was grounded, heat-treated at 1200 °C, and then grounded again to be used, but the present invention is not limited thereto, and MgO with a crystallinity close to 100% can be used without limitation.

According to the studies of the present inventors, it has been found out that when a lithium iron phosphate-based compound satisfying the AI value of 0.28 or less, preferably 0.20 to 0.28, more preferably 0.20 to 0.27, and most preferably 0.22 to 0.25, is applied as a positive electrode active material, initial capacity properties of an LFP cell are significantly improved.

Hereinafter, the present invention will be described in detail.

<Lithium secondary battery>

First, a lithium secondary battery according to the present invention will be described.

The lithium secondary battery of the present invention includes a positive electrode, a negative electrode, a separator interposed between the positive electrode and the negative electrode, and an electrolyte, wherein the positive electrode includes a lithium iron phosphate-based active material having an amorphous-content index (AI) of 0.28 or less, as defined by Equation (1) below.

$$AI = \frac{I_{MgO}^{2\theta=43}}{\sum_{2\theta=15}^{36} I_{LFP}^{2\theta}}$$

Equation (1):

In Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and

the $\sum_{2\theta=15}^{36} I_{LFP}^{2\theta}$ is the sum of peak areas in the range of $2\theta = 15°$ to $36°$ in the X-ray diffraction analysis graph of the sample.

(1) Positive electrode

The positive electrode according to the present invention includes, as a positive electrode active material, a lithium iron phosphate-based active material having an amorphous-content index (AI) of 0.28 or less, preferably 0.20 to 0.28, more preferably 0.20 to 0.27, even more preferably 0.22 to 0.27, and most preferably 0.22 to 0.25 , as defined by Equation (1) below. Specifically, the positive electrode includes a positive electrode current collector and a positive electrode active material layer formed on the positive electrode current collector, and including the lithium iron phosphate-based active material.

$$AI = \frac{I_{MgO}^{2\theta=43}}{\sum_{2\theta=15}^{36} I_{LFP}^{2\theta}}$$

Equation (1):

In Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the $\sum_{2\theta=15}^{36} I_{LFP}^{2\theta}$ is the sum of peak areas in the range of $2\theta = 15°$ to $36°$ in the X-ray diffraction analysis graph of the sample.

As described above, an AI value is a value corresponding to the amorphous content in a lithium iron phosphate-based active material. That is, it can be said that if the AI value is large, the amorphous ratio in the lithium iron phosphate-based active material is high, and if the AI value is small, the amorphous ratio in the lithium iron phosphate-based active material is low. Meanwhile, since an amorphous phase does not participate in a battery reaction, when the ratio of the amorphous phase in the lithium iron phosphate-based active material increases, battery capacity properties are degraded. When the AI value is small (0.28 or less), the amorphous ratio in the lithium iron phosphate-based active material is small, so that excellent capacity properties may be implemented.

Meanwhile, the AI value is affected not only by the ratio of crystalline and amorphous in lithium iron phosphate particles themselves, but also by additional structure and amorphous content within the LFP-based active material, such as the content of a conductive carbon layer formed on the surface of the lithium iron phosphate particles or the content of impurities which can be formed or inadvertently introduced during manufacturing. That is, when a conductive carbon layer is formed on the surface of lithium iron phosphate particles, the content of the conductive carbon layer may also affect an AI value. Specifically, when the content of a conductive carbon layer increases, an AI value also increases, and when the content of a conductive carbon layer decreases, an AI value decreases. When a lithium iron phosphate-based active material has an AI value of less than 0.2, the content of a conductive carbon layer is small, in which case the conductivity of the lithium iron phosphate-based active material is insufficient, resulting in degrading electrochemical performance.

Meanwhile, the lithium iron phosphate-based active material may comprise, for example, a lithium iron phosphate-based compound represented by [Formula 1] below.

$$[Formula\ 1] \qquad Li_{1-a}[Fe_{1-x}M_x]_{1-y}PO_{4-b}A_b$$

In Formula 1 above, M may be any one or more selected from the group consisting of Mn, Ni, Co, Cu, Sc, Ti, Cr, V, and Zn, and A may be any one or more selected from the group consisting of S, Se, F, Cl, and I.

In addition, the a may be $-0.5 \leq a \leq 0.5$, preferably $-0.3 \leq a \leq 0.3$, and more preferably $-0.1 \leq a \leq 0.1$.

In addition, the x may be $0 \leq x < 1$, preferably $0 \leq x \leq 0.8$, and more preferably $0 \leq x \leq 0.7$.

The y may be $-0.5 \leq y \leq 0.5$, preferably $-0.3 \leq y \leq 0.3$, and more preferably $-0.1 \leq y \leq 0.1$.

In addition, the b may be $0 \leq b \leq 0.1$, preferably $0 \leq b \leq 0.08$, and more preferably $0 \leq b \leq 0.05$.

Among the above, in consideration of the effect of improving conductivity, and subsequently, rate properties and capacity properties, the LFP may be more specifically $LiFePO_4$, Li (Fe, Mn)$PO_4$, Li (Fe, Co)$PO_4$, Li (Fe, Ni)$PO_4$, or a mixture thereof, and more specifically $LiFePO_4$.

Meanwhile, the lithium iron phosphate-based compound may have a molar ratio (Li/(Fe+M)) of Li to Fe and M, that is, (1-a)/(1-y) in Formula 1, of 1.0 to 1.1, preferably 1.05 to 1.09, and more preferably 1.06 to 1.085. When the ratio of Li/Fe is outside the above range, lithium mobility may be degraded, and accordingly, an initial capacity may be degraded.

In addition, the lithium iron phosphate-based compound may have a molar ratio (P/(Fe+M)) of P to Fe and M, that is, 1/(1-y) in Formula 1, of 1.01 to 1.04, preferably 1.02 to 1.04, more preferably 1.025 to 1.035. When the ratio of P/(Fe+M) is too small, there is a lack of polyanions $PO_4$ in a lattice structure, and when the ratio of P/(Fe+M) is too large, capacity properties may be degraded due to a Li-rich state in which Li at Fe and M sites is increased.

Meanwhile, the contents (moles) of Li, Fe, and P in the lithium iron phosphate-based compound are values measured through ICP analysis. The ICP analysis may be performed by the following method.

First, a lithium iron phosphate-based positive electrode active material is aliquoted to about 10 mg in a vial, and weighed accurately. Then, 2 ml of hydrochloric acid and 1 ml of hydrogen peroxide are added to the vial, and then dissolved at 100 °C for 3 hours. Next, 50 g of ultrapure water is added to the vial, and 0.5 ml of 1000 $\mu$g/ml scandium (internal standard) is accurately added thereto to prepare a sample solution. The sample solution is filtered with a PVDF 0.45um filter, and the concentrations of Li, Fe, and P components are measured with ICP-OES equipment (Perkin Elmer, AVIO500). If necessary, further dilution may be performed such that a measured concentration of the sample solution is within a calibration range of each component.

The particle shape of the lithium iron phosphate-based compound is not particularly limited, but may be spherical in consideration of tap density.

In addition, the lithium iron phosphate-based compound may be composed of a single particle of a primary particle, or may be composed of a secondary particle in which a plurality of primary particles are agglomerated. At this time, the primary particles may be uniform or non-uniform. In the present disclosure, the primary particle means a primary structural body of a single particle, and the secondary particle means an agglomerate, that is, a secondary structural body, in which primary particles are agglomerated by physical or chemical bonding between the primary particles.

Meanwhile, the lithium iron phosphate-based compound may further include a carbon-based coating layer. A lithium iron phosphate-based compound is structurally very stable, but has a disadvantage of having relatively low electrical conductivity. Therefore, it is desirable to improve electrical conductivity and resistance by coating highly conductive carbon on the surface of the lithium iron phosphate-based compound.

In addition, the lithium iron phosphate-based compound may have an average particle diameter ($D_{50}$) of 1 $\mu$m to 20 $\mu$m, preferably 2 $\mu$m to 20 $\mu$m, and more preferably 2 $\mu$m to 15 $\mu$m. When the average particle diameter of the lithium iron phosphate-based compound is less than 1 $\mu$m, the properties of a positive electrode may be degraded due to a decrease in dispersibility according to the agglomeration between particles when manufacturing the positive electrode. In addition, when the average particle diameter ($D_{50}$) of the lithium iron phosphate-based compound is greater than 20 $\mu$m, the mechanical strength may be degraded and the specific surface area may be decreased, or the porosity between particles of the lithium iron phosphate-based compound may be excessively increased to degrade tap density, or a sedimentation phenomenon may occur when preparing a positive electrode slurry.

Meanwhile, when the lithium iron phosphate-based compound is a secondary particle, a primary particle may have an average particle diameter of 100 nm to 2 $\mu$m, preferably 100 nm to 1 $\mu$m, under a condition that satisfies the average particle diameter ($D_{50}$) range of the secondary particle. When the average particle diameter of the primary particle is less than 100 nm, the dispersibility is degraded due to the agglomeration between particles, and when greater than 2 $\mu$m, the capacitive properties of an electrode may be degraded due to a decrease in filling density.

Meanwhile, the lithium iron phosphate-based compound may further include a conductive coating layer on the surface thereof. The conductive coating layer is to improve the conductivity of the lithium iron phosphate-based compound, and may include any one or a mixture of two or more selected from the group consisting of a carbon-based material, a metal, and a conductive polymer. Among the above, when a conductive coating layer of a carbon-based material is included, the conductivity may be effectively improved without significantly increasing the weight of the lithium iron phosphate-based compound.

The conductive coating layer may be formed by a typical method for forming a coating layer, and may be included in 1 wt% to 7 wt%, more specifically 1 wt% to 5 wt%, with respect to the total weight of the lithium iron phosphate-based compound. When the content of the conductive coating layer is greater 7 wt%, which is excessively high, there is a risk in that battery properties may be degraded due to a relative decrease in LFP content, and when less than 1 wt%, the effect of improving conductivity according to the formation of a conductive layer may be insignificant.

The lithium iron phosphate-based compound may be included in 85 wt% to 98 wt%, preferably 90 wt% to 98 wt%, and more preferably 94 wt% to 98 wt% with respect to the total weight of the positive electrode active material layer. When the content of the lithium iron phosphate-based compound satisfies the above range, excellent energy density may be implemented.

The lithium iron phosphate-based compound may be manufactured by methods for producing lithium iron phosphate-based compounds known in the art, such as solid-phase synthesis, sol-gel method, hydrothermal synthesis, spray thermal decomposition, but are not limited thereto.

For example, precursor materials for a lithium iron phosphate compound (for example, iron precursor, phosphoric acid precursor, and/or lithium precursor) may be mixed in a solid state and then calcined to synthesize a lithium iron phosphate compound (solid phase synthesis method).

Alternatively, precursor materials for lithium iron phosphate compounds (for example, iron precursor, phosphate precursor, and/or lithium precursor) may be dissolved in a solvent, add additives such as acid/base or chelating agent to proceed the sol-gel reaction. Then, calcination is performed to synthesize lithium iron phosphate compounds (sol-gel method).

Alternatively, precursor materials for lithium iron phosphate compounds (for example, iron precursor, phosphate precursor, and/or lithium precursor) may be dissolved in water and then reacted under high temperature and high pressure to prepare the lithium iron phosphate compound (hydrothermal synthesis method).

Alternatively, a lithium iron phosphate compound can be prepared by spraying a solution in which precursor materials for lithium iron phosphate compounds (for example, iron precursor, phosphate precursor, and/or lithium precursor) are dissolved, as droplets, evaporating the solvent, and heating. (Spray Pyrolysis).

Meanwhile, the iron precursor may be, for example, iron oxalate ($FeC_2O_4 \cdot 2H_2O$), iron acetate ($Fe(CH_3COO)_2$), $FeSO_4$. $FeCO_3$, $FeO$, but are not limited thereto. The phosphoric acid precursor may be, for example, ammonium phosphate, ammonium dihydrogen phosphate, lithium phosphate, iron phosphate, phosphoric acid, phosphorus oxide ($P_2O_5$, $P_4O_{10}$), diammonium hydrogen phosphate, but are not limited to thereto. The lithium precursor may be, for example, lithium chloride, lithium carbonate, lithium hydroxide, lithium phosphate, lithium nitrate, lithium sulfate, lithium oxide, lithium aluminum oxide, but are not limited thereto.

Meanwhile, the lithium iron phosphate-based active material with conductive coating may be prepared by mixing the lithium iron phosphate with a carbon source and/or hydrocarbon gas, and then heating the mixture.

Meanwhile, the positive electrode current collector is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 μm to 500 μm, and microscopic irregularities may be formed on the surface of the current collector to improve the adhesion of a positive electrode active material. For example, the positive electrode current collector may be used in various forms such as a film, a sheet, a foil, a net, a porous body, a foam, and a non-woven body.

Meanwhile, the positive electrode active material layer may additionally include a conductive material, a binder, a dispersant, and the like in addition to the lithium iron phosphate-based active material.

At this time, the conductive material is used to impart conductivity to an electrode, and any conductive material may be used without particular limitation as long as it has electronic conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

The conductive material may be included in an amount of 0.4 wt% to 10 wt%, preferably 0.4 wt% to 7 wt%, and more preferably 0.4 wt% to 5 wt% based on the total weight of a positive electrode active material layer. When the content of the conductive material satisfies the above range, excellent positive electrode conductivity and capacity may be implemented.

Also, the binder serves to improve the bonding between positive electrode active material particles and the adhesion between a positive electrode active material and a current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The binder may be included in an amount of 1 wt% to 5 wt%, preferably 1.5 wt% to 5 wt%, more preferably 1.5 wt% to 4 wt%, and even more preferably 2 wt% to 4 wt% based on the total weight of a positive electrode active material layer. When the binder content satisfies the above range, a separate layer (for example, a primer layer) to improve adhesion is not required since adhesion between the current collector and the positive electrode active material layer is high, and when a positive electrode loading amount is high (for example, 400 mg/25 cm$^2$ or greater), excellent capacity properties and lifespan properties may be implemented since positive electrode adhesion is maintained excellent.

The dispersant is to improve dispersibility of a lithium iron phosphate-based active material, a conductive material, and the like, and for example, hydrogenated nitrile-butadiene rubber (H-NBR) and the like may be used, but the present invention is not limited thereto, and various dispersants capable of improving dispersibility of a positive electrode slurry may be used. The dispersant may be included in 2 wt% or less, preferably 0.1 wt% to 2 wt%, and more preferably 0.1 wt% to 1 wt%, with respect to the total weight of the positive electrode active material layer. When the dispersant content is too low, the effect of improving dispersion is insignificant, and when too high, battery performance may be adversely affected thereby.

Meanwhile, the positive electrode according to the present invention may have a loading amount of 350 mg/25 cm$^2$ to 2000 mg/25 cm$^2$, preferably 400 mg/25 cm$^2$ to 1700mg/25 cm$^2$, and more preferably 450 mg/25 cm$^2$ to 1000 mg/25 cm$^2$. When the positive electrode loading amount satisfies the above range, capacity properties that are higher than those of a typical LFP battery may be implemented. At this time, the positive electrode loading amount means the weight of a lithium iron phosphate-based active material included in the area of 25cm$^2$ of the positive electrode.

In addition, the positive electrode may have a porosity of about 25% to 60%, preferably 28% to 55%, more preferably 28% to 40%, even more preferably 28% to 35%, and even more preferably 25% to 30%. When the positive electrode porosity is formed in the above range, both energy density and electrolyte wettability may be maintained excellent. In the case of an LFP battery, since the particle diameter of a lithium iron phosphate-based active material, which is a positive electrode active material, is small, the pore size in a positive electrode is small, and accordingly, electrolyte wettability is decreased, and thus, it is desirable that positive electrode porosity is formed higher than that of a battery using another positive electrode active material, but as the positive electrode porosity increases, there is a problem in that energy density decreases. Therefore, it is necessary to appropriately control the positive electrode porosity so as to maintain both the energy density and the electrolyte wettability excellent.

(2) Negative electrode

In the present invention, the negative electrode may be a negative electrode commonly used in the art, and for example, may include a negative electrode current collector, and a negative electrode active material layer positioned on the negative electrode current collector.

For example, the negative electrode may be manufactured by applying and then drying a negative electrode slurry including a negative electrode active material, and selectively a binder and a conductive material, on a negative electrode current collector to form a negative electrode active material layer, followed by roll-pressing, or by casting the negative electrode slurry on a separate support, and then laminating a film peeled off from the support on a negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 μm to 500 μm, and as in the case of the positive electrode current collector, microscopic irregularities may be formed on the surface of the current collector to improve the adhesion of a negative electrode active material. For example, the negative electrode current collector may be used in various forms such as a film, a sheet, a foil, a net, a porous body, a foam, and a non-woven body.

The negative electrode active material layer selectively includes a binder and a conductive material in addition to a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a (semi)metal-based material alloyable with lithium such as Si, Al, Sn, Pb, Zn, Bi, In, Mg, Ga, Cd, an Si alloy, an Sn alloy, or an Al alloy; a (semi)metal oxide which may be doped and undoped with lithium such as $SiO_x$ ($0 < x < 2$), $SnO_2$, a vanadium oxide, and a lithium vanadium oxide; or a composite including the (semi)metal-based material and the carbonaceous material such as an Si-C composite or an Sn-C composite, and any one thereof or a mixture of two or more thereof may be used. In addition, a metal lithium thin film may be used as the negative electrode active material. Also, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

Also, the binder and the conductive material may be the same as those described above in the description of the positive electrode.

(3) Separator

In the present invention, the separator is to separate the negative electrode and the positive electrode and to provide a movement path for lithium ions, and any separator may be used without particular limitation as long as it is a separator commonly used in a secondary battery, and particularly, a separator having excellent moisture-retention of an electrolyte as well as low resistance to ion movement in the electrolyte is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a stacked structural body having two or more layers thereof may be used. Also, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may selectively be used in a single-layered or multi-layered structure.

(4) Electrolyte

The electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a lithium secondary battery, but is not limited thereto.

For example, the electrolyte may include an organic solvent and a lithium salt.

Any organic solvent may be used as the organic solvent without particular limitation as long as it may serve as a medium through which ions involved in an electrochemical reaction of the battery may move. Specifically, as the organic solvent, an ester-based solvent such as methyl acetate, ethyl acetate, $\gamma$-butyrolactone, and $\varepsilon$-caprolactone, an ether-based solvent such as dibutyl ether or tetrahydrofuran, a ketone-based solvent such as cyclohexanone, an aromatic hydrocarbon-based solvent such as benzene and fluorobenzene, a carbonate-based solvent such as dimethyl carbonate (DMC), diethyl carbonate (DEC), ethylmethyl carbonate (EMC), ethylene carbonate (EC), and propylene carbonate (PC), an alcohol-based solvent such as ethyl alcohol and isopropyl alcohol, and the like may be used. Among the above, a carbonate-based solvent is preferred, and a mixture of a cyclic carbonate (e.g., ethylene carbonate or propylene carbonate) having high ionic conductivity and high permittivity, which may increase charge/discharge performance of the battery, and a low-viscosity linear carbonate-based compound (e.g., ethylmethyl carbonate, dimethyl carbonate, or diethyl carbonate) is more preferred.

Any compound may be used as the lithium salt without particular limitation as long as it can provide lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in the concentration range of 0.1 M to 2.0 M. When the concentration of the lithium salt is in the above range, the electrolyte has suitable conductivity and viscosity, thereby exhibiting excellent performance, and lithium ions may effectively move.

For purposes of improving the lifespan properties of a battery, suppressing the reduction in battery capacity, improving the discharge capacity of the battery, and the like, the electrolyte may further include an additive in addition to the above electrolyte components. As the additive, various electrolyte additives used in lithium secondary batteries may be used, and for example, the additive may be a halocarbonate-based compound such as fluoroethylene carbonate, a nitrile-based compound such as succinonitrile, a sultone compound such as 1,3-propanesultone and 1,3-propenesultone, a carbonate-based compound such as vinylene carbonate, or a combination thereof, but is not limited thereto. At this time, the additive may be included in 0.1 wt% to 10 wt%, preferably 0.1 wt% to 5 wt%, with respect to the total weight of the electrolyte.

The lithium secondary battery of the present invention as described above has an excellent charge capacity compared to the prior art. Specifically, the lithium secondary battery according to the present invention may have the first charge capacity of 93% to 100%, preferably 93% to 98%, and more preferably 94% to 97% of the theoretical capacity, as measured after charging the battery to 3.7 V at 0.1 C based on the theoretical capacity (170 mAh/g) of lithium iron phosphate.

Specifically, the lithium secondary battery according to the present invention may have the first charge capacity of 158 mAh/g to 170 mAh/g, preferably 158 mAh/g to 167 mAh/g, and more preferably 159 mAh/g to 165 mAh/g, as measured after charging the battery to 3.7 V at 0.1 C based on the theoretical capacity (170 mAh/g) of lithium iron phosphate.

<Manufacturing method of lithium secondary battery>

Next, a method for manufacturing a lithium secondary battery according to the present invention will be described.

The method for manufacturing a lithium secondary battery according to the present invention includes steps of (1) preparing a sample in which a lithium iron phosphate-based active material and MgO are mixed at a weight ratio of 70 : 30, (2) measuring an AI value defined by Equation (1) below by X-ray diffraction analysis of the sample, (3) selecting, as a positive electrode active material, a lithium iron phosphate-based active material satisfying a pre-set range of the AI value, (4) manufacturing a positive electrode including the selected positive electrode active material, (5) manufacturing an electrode assembly including the positive electrode, a separator, and a negative electrode, and (6) accommodating the electrode assembly in a battery case, and then injecting an electrolyte into the battery case.

$$\mathrm{Equation\ (1)}$$

$$AI = \frac{I_{MgO}^{2\theta=43}}{\displaystyle\sum_{2\theta=15}^{36} I_{LFP}^{2\theta}}$$

In Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the

$$\sum_{2\theta=15}^{36} I_{LFP}^{2\theta}$$

is the sum of peak areas in the range of $2\theta = 15°$ to $36°$ in the X-ray diffraction analysis graph of the sample.

(1) Sample preparation step

First, a sample is prepared by mixing a lithium iron phosphate-based active material and MgO at a weight ratio of 70 : 30. When the sample has the composition as described above, measured values have the smallest deviation when an AI is measured, and reproducibility is exhibited excellent.

The sample is for XRD analysis, and is a mixture of an internal standard and a lithium iron phosphate-based active material, which is a measurement target material. In order to measure an amorphous content in the lithium iron phosphate-based active material, a 100% crystalline material should be used as an internal standard.

According to the studies of the present inventors, it has been found out that when MgO is used as an internal standard, and when the internal standard is mixed at 30 wt% of the total weight of the sample, measured values have the smallest deviation and reliability is excellent.

(2) AI measurement step

The sample prepared as described above is subjected to X-ray diffraction analysis.

The X-ray diffraction analysis may be performed using bruker D8 Endeavor equipment. Specifically, according to an amount of the sample to be measured, powder of the sample is put into the center groove of a holder for general powder or a holder for small-amount of powder of the bruker D8 Endeavor equipment, the height of the sample is matched with the edge of the holder by using a slide glass, the surface of the sample is prepared to be uniform, and then the fixed divergence slit is adjusted to 0.3 according to a sample size, and the $2\theta$ region is measured every 0.016 degrees for 0.5 seconds. In addition, the measurement is performed while rotating the holder at 15 RPM to compensate for non-uniformity which may occur during sampling.

Then, a peak area appearing at $2\theta = 43° \pm 0.5°$ of the X-ray diffraction graph, that is, $I_{MgO}^{2\theta=43}$, and the sum of peak areas appearing in the range of $2\theta = 15°$ to $36°$, that is,

$$\sum_{2\theta=15}^{36} I_{LFP}^{2\theta}$$

are obtained and substituted into Equation (1) to calculate an AI value.

$$AI = \frac{I_{MgO}^{2\theta=43}}{\sum_{2\theta=15}^{36} I_{LFP}^{2\theta}}$$

Equation (1):

In Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the

$$\sum_{2\theta=15}^{36} I_{LFP}^{2\theta}$$

is the sum of peak areas in the range of $2\theta = 15°$ to $36°$ in the X-ray diffraction analysis graph of the sample.

(3) Positive electrode active material selection step

Next, a lithium iron phosphate-based active material having the measured AI value satisfying a pre-set range is selected as a positive electrode active material. At this time, the pre-set range may be appropriately selected in consideration of the electrochemical performance of an LFP cell to be finally manufactured, and may be, for example, 0.28 or less, preferably 0.20 to 0.28, more preferably 0.20 to 0.27, and most preferably 0.22 to 0.25. When a lithium iron phosphate-based compound satisfying the above range of an AI value is applied as a positive electrode active material, initial capacity properties of an LFP cell are exhibited excellent.

(4) Positive electrode manufacturing step

Next, a positive electrode including the selected positive electrode active material is manufactured.
At this time, the positive electrode may be manufactured by a method for manufacturing a positive electrode commonly known in the art, except that a lithium iron phosphate-based active material having an AI value satisfying the pre-set range is applied as a positive electrode active material. For example, the positive electrode may be manufactured by a method in which a positive electrode active material, a binder, and a conductive material are mixed to prepare a positive electrode slurry, and then the positive electrode slurry is applied and dried on a positive electrode current collector to form a positive electrode active material layer, followed by roll-pressing.
Meanwhile, specific types and specifications of the positive electrode active material, the binder, and the conductive material are the same as described above, and thus, detailed descriptions thereof are omitted.

(5) Electrode assembly manufacturing step

Next, an electrode assembly including the positive electrode manufactured as described above, a separator, and a negative electrode is manufactured. Specific types and specifications of the negative electrode and the separator are the same as described above, and thus, detailed descriptions thereof are omitted.
The electrode assembly may be manufactured by sequentially stacking the positive electrode, the separator, and the negative electrode, and the shape of the electrode assembly is not particularly limited, and the electrode assembly may be an electrode assembly commonly known in the lithium secondary battery field, such as a wound-type, stacked-type, and/or stacked-and-folded electrode assembly.

(6) Secondary battery manufacturing step

Next, a lithium secondary battery is manufactured by accommodating the electrode assembly in a battery case and then injecting an electrolyte thereto.

At this time, as the battery case, battery cases commonly known in the lithium secondary battery field, for example, cylindrical, prismatic, or pouch-type battery cases may be used without limitation, and the battery case is not particularly limited.

Meanwhile, the specific type and specification of the electrolyte are the same as described above, and the electrolyte injection may be performed through an electrolyte injection method commonly known in the lithium secondary battery field.

## MODE FOR CARRYING OUT THE INVENTION

Hereinafter, the present invention will be described in more detail with reference to specific examples.

**Experimental Example 1: Measurement of amorphous content index AI of lithium iron phosphate-based compound**

Four types of lithium iron phosphate-based active materials A to D, which were obtained from a different manufacturing lot of the same supplier, were prepared. The lithium iron phosphate-based active materials are LiFePO$_4$ with an amorphous carbon coating. Each of the lithium iron phosphate-based active materials A to D and MgO were mixed at a weight ratio of 70 : 30 to prepare a sample. The sample was subjected to X-ray diffraction analysis to obtain an XRD graph, and an AI value of Equation (1) below was calculated using the obtained XRD graph.

$$AI = \frac{I_{MgO}^{2\theta=43}}{\sum_{2\theta=15}^{36} I_{LFP}^{2\theta}}$$

Equation (1):

At this time, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the

$$\sum_{2\theta=15}^{36} I_{LFP}^{2\theta}$$

is the sum of peak areas in the range of $2\theta = 15°$ to $36°$ in the X-ray diffraction analysis graph of the sample.

Meanwhile, the XRD graph was measured using Bruker's D8 Endeavor, and the measurement conditions were as follows.

Light source: Cu tube(Cu K alpha 1, alpha 2), Wavelength=1.5406(alpha 1), 1.5444(alpha 2)
X-ray Generator power: 40kV, 40mA
Divergence slit : 0.5°
$2\theta$=10~90
Step : 0.015°
Time/step: 1sec
Total measurement time: 90min

The measurement results are shown in Table 1 below.

[Table 1]

| Classification | AI |
|---|---|
| A | 0.291 |
| B | 0.230 |

(continued)

| Classification | AI |
| --- | --- |
| C | 0.261 |
| D | 0.257 |

**Example 1**

A positive electrode slurry was prepared by mixing 95 parts by weight of Sample B as a positive electrode active material, 2 parts by weight of carbon black as a conductive material, and 3 parts by weight of PVdF as a binder in an N-methylpyrrolidone solvent. The positive electrode slurry was applied on an aluminum current collector having a thickness of 15 $\mu$m, dried, and then roll-pressed to manufacture a positive electrode having a loading amount of 500 mg/25 cm$^2$ and a porosity of 29%.

Meanwhile, a negative electrode slurry was prepared by adding 95 parts by weight of artificial graphite as a negative electrode active material, 3 parts by weight of SBR and 1 part by weight of CMC as a binder, and 1 part by weight of carbon black as a conductive material to distilled water. The negative electrode slurry was applied on a copper current collector having a thickness of 8 $\mu$m, dried, and then roll-pressed to manufacture a negative electrode having a loading amount of 240 mg/25 cm$^2$ and a porosity of 29%.

The positive electrode and the negative electrode manufactured above were stacked together with a polyethylene separator to manufacture an electrode assembly, and then the electrode assembly was put into a battery case, followed by injecting an electrolyte solution in which 1 M LiPF$_6$ was dissolved in a solvent prepared by mixing ethylene carbonate:ethyl methyl carbonate:diethyl carbonate at a ratio of 1:1:1.

**Example 2**

A lithium secondary battery was manufactured in the same manner as in Example 1, except that Sample C was used instead of Sample B.

**Example 3**

A lithium secondary battery was manufactured in the same manner as in Example 1, except that Sample D was used instead of Sample B.

**Comparative Example 1**

A lithium secondary battery was manufactured in the same manner as in Example 1, except that Sample A was used instead of Sample B.

**Experimental Example 2**

The lithium secondary batteries manufactured in Examples 1 to 3 and Comparative Example 1 were charged to 3.7 V at 0.1 C based on the theoretical capacity (170 mAh/g) of lithium phosphate iron to measure the first charge capacity. The measurement results are shown in FIG. 1 and Table 2 below.

[Table 2]

| Classification | Charge capacity (mAh/g) | Percentage of theoretical capacity |
| --- | --- | --- |
| Example 1 | 160.2 | 94.2% |
| Example 2 | 159.9 | 94.1% |
| Example 3 | 160.0 | 94.1% |
| Comparative Example 1 | 156.3 | 91.9% |

As shown in FIG. 1 and Table 2, the lithium secondary batteries of Examples 1 to 3 to which the lithium iron phosphate-based active materials B to D having an AI value of 0.28 or less were applied exhibited capacity properties superior to those of the lithium secondary battery of Comparative Example 1 having an AI value of greater than 0.28.

Specifically, Examples 1-3 showed at least 2% greater percentage of theoretical capacity than Comparative Example 1.

In the battery arts, such an improvement is considered highly significant. For example, when a battery product is included in an electric vehicle ("EV"), a 2% difference in capacity can result in at least 10 miles of difference in range for the EV, representing a significant practical advantage.

**Experimental Example 3**

Sample 1 was prepared by mixing each of the lithium iron phosphate active materials A and B of Experimental Example 1 and ZnO at a weight ratio of 70 : 30, and X-ray diffraction analysis was performed on the Sample 1, and then, using a complete structure model for $LiFePO_4$ (Space group: Pnma, 62) and ZnO (Space group: $P6_{3mc}$, 186), phases present in the sample in the region of 10 to 120° were subjected to Rietveld refinement analysis to measure an amorphous content in the lithium iron phosphate active material. At this time, the analysis was performed three times for each sample, and the amorphous content in the lithium iron phosphate active material was calculated by fixing the ZnO content at 30 wt% and then using a relative ratio of the content of the lithium iron phosphate active material thereto.

Sample 2 was prepared by mixing each of the lithium iron phosphate active materials A and B of Experimental Example 1 and MgO at a weight ratio of 70 : 30, and X-ray diffraction analysis was performed on the Sample 2, and then, using a complete structure model for $LiFePO_4$ (Space group: Pnma, 62) and MgO (Space group: Fm-3m, No, 225), phases present in the sample in the region of 10 to 120° were subjected to Rietveld refinement analysis to measure an amorphous content in the lithium iron phosphate active material. At this time, the analysis was performed three times for each sample, and the amorphous content in the lithium iron phosphate active material was calculated by fixing the MgO content at 30 wt% and then using a relative ratio of the content of the lithium iron phosphate active material thereto.

An AI value of Equation (1) was measured using an X-ray diffraction graph obtained by performing X-ray diffraction analysis on Sample 2.

The measurement results are shown in [Table 3] below.

[Table 3]

| Samples | Internal standard | Number of trials | Sample 1 | Sample 2 |
|---|---|---|---|---|
| Rietveld refinement | ZnO | 1 | -1.73 | -1.30 |
| | | 2 | -3.74 | 4.50 |
| | | 3 | 0.80 | 3.60 |
| | MgO | 1 | 7.76 | 3.89 |
| | | 2 | 3.50 | 8.20 |
| | | 3 | 4.58 | 3.42 |
| AI measurement | MgO | 1 | 0.29 | 0.23 |
| | | 2 | 0.28 | 0.24 |
| | | 3 | 0.29 | 0.22 |

As shown in [Table 3] above, the AI of the present invention showed a very small deviation according to the number of measurements, and excellent reproducibility, whereas when the amorphous content was measured through the Rietveld refining method, a deviation according to the number of trials was very large, making it impossible to obtain a reliable value.

**Claims**

1.  A lithium secondary battery comprising:

    a positive electrode, a negative electrode, a separator interposed between the positive electrode and the negative electrode, and an electrolyte,
    wherein the positive electrode includes a lithium iron phosphate-based active material having an amorphous-content index (AI) of 0.28 or less as defined by Equation (1) below:

$$AI = \frac{I_{MgO}^{2\theta=43}}{\sum\limits_{2\theta=15}^{36} I_{LFP}^{2\theta}}$$

Equation (1):

wherein in Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the $\sum\limits_{2\theta=15}^{36} I_{LFP}^{2\theta}$ is the sum of peak areas in a range of $2\theta = 15°$ to $36°$ in the X-ray diffraction analysis graph of the sample.

2. The lithium secondary battery of claim 1, wherein the positive electrode comprises a lithium iron phosphate-based active material having the amorphous-content index (AI) of 0.20 to 0.27.

3. The lithium secondary battery of claim 1, wherein the lithium iron phosphate-based active material includes a lithium iron phosphate-based compound represented by [Formula 1] below:

[Formula 1]    $Li_{1-a}[Fe_{1-x}M_x]_{1-y}PO_{4-b}A_b$

wherein in Formula 1 above, M is any one or more selected from the group consisting of Mn, Ni, Co, Cu, Sc, Ti, Cr, V, and Zn, A is any one or more selected from the group consisting of S, Se, F, Cl, and I, $-0.5<a<0.5$, $0 \leq x<1$, $-0.5<y<0.5$, and $0 \leq b \leq 0.1$.

4. The lithium secondary battery of claim 3, wherein the lithium iron phosphate-based compound has a molar ratio of Li to Fe and M(Li/(Fe+M)) of 1.0 to 1.1.

5. The lithium secondary battery of claim 3, wherein the lithium iron phosphate-based compound has a molar ratio of P to Fe and M(P/(Fe+M)) of 1.01 to 1.04.

6. The lithium secondary battery of claim 1, wherein the lithium iron phosphate-based active material further comprises a conductive coating layer.

7. The lithium secondary battery of claim 1, wherein the positive electrode has a loading amount of 350 mg/25 cm$^2$ to 2000 mg/25 cm$^2$.

8. The lithium secondary battery of claim 1, wherein the positive electrode has a porosity of 25% to 60%.

9. The lithium secondary battery of claim 1, wherein, a charge capacity measured after charging the lithium secondary battery to 3.7 V at 0.1 C is 93% to 100% of a theoretical capacity of the lithium iron phosphate-based active material.

10. A method for manufacturing a lithium secondary battery, the method comprising steps of:

preparing a sample in which a lithium iron phosphate-based active material and MgO are mixed at a weight ratio of 70 : 30;
measuring an AI value represented by Equation (1) below by X-ray diffraction analysis of the sample;
selecting, as a positive electrode active material, a lithium iron phosphate-based active material satisfying a pre-set range of the AI value;
manufacturing a positive electrode including the selected positive electrode active material;
manufacturing an electrode assembly including the positive electrode, a separator, and a negative electrode; and
accommodating the electrode assembly in a battery case, and then injecting an electrolyte into the battery case:

Equation (1)

$$AI = \frac{I_{MgO}^{2\theta=43}}{\sum_{2\theta=15}^{36} I_{LFP}^{2\theta}}$$

wherein in Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the $\sum_{2\theta=15}^{36} I_{LFP}^{2\theta}$ is the sum of peak areas in a range of $2\theta = 15°$ to $36°$ in the X-ray diffraction analysis graph of the sample.

11. The method of claim 10, wherein the pre-set range is 0.28 or less.

12. The method of claim 10, wherein the pre-set range is 0.20 to 0.27.

13. The lithium secondary battery of claim 3, wherein the lithium iron phosphate-based compound is $LiFePO_4$, which is provided with a conductive coating layer.

14. A positive electrode, comprising a lithium iron phosphate-based active material having an amorphous-content index (AI) of 0.28 or less as defined by Equation (1) below:

$$AI = \frac{I_{MgO}^{2\theta=43}}{\sum_{2\theta=15}^{36} I_{LFP}^{2\theta}}$$

Equation (1):

wherein in Equation (1) above, the $I_{MgO}^{2\theta=43}$ is a peak area appearing at $2\theta = 43° \pm 0.5°$ in an X-ray diffraction analysis graph of a sample in which the lithium iron phosphate-based active material and MgO are mixed at a weight ratio of 70 : 30, and the $\sum_{2\theta=15}^{36} I_{LFP}^{2\theta}$ is the sum of peak areas in a range of $2\theta = 15°$ to $36°$ in the X-ray diffraction analysis graph of the sample.

[FIG. 1]

## INTERNATIONAL SEARCH REPORT

| | International application No. |
|---|---|
| | **PCT/KR2023/016801** |

### A. CLASSIFICATION OF SUBJECT MATTER

**H01M 4/58**(2010.01)i; **H01M 4/36**(2006.01)i; **H01M 4/136**(2010.01)i; **H01M 4/1397**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/58(2010.01); H01M 10/0525(2010.01); H01M 4/36(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 비정질 함량지수 (amorphous-content index), 리튬인산철 (LiFePO4, lithium iron phosphate), 양극 (cathode)

### C. DOCUMENTS CONSIDERED TO BE RELEVANT

| Category* | Citation of document, with indication, where appropriate, of the relevant passages | Relevant to claim No. |
|---|---|---|
| A | KR 10-2010-0008786 A (BYD COMPANY LIMITED) 26 January 2010 (2010-01-26)<br>See abstract; paragraphs [0066]-[0068] and [0072]-[0073]; and claims 1, 2 and 9. | 1-14 |
| A | SONG, J. et al. Comparing the electrochemical performance of LiFePO4/C modified by Mg doping and MgO coating. Journal of Nanomaterials. 2013, vol. 2013, thesis no. 687501, pp. 1-8.<br>See entire document. | 1-14 |
| A | HUANG, Y. et al. A simple route to improve rate performance of LiFePO4/reduced graphene oxide composite cathode by adding Mg2+ via mechanical mixing. Journal of Power Sources. 2017, vol. 347, pp. 29-36.<br>See entire document. | 1-14 |
| A | KR 10-2012-0019426 A (HAITE ELECTRONIC GROUP CO., LTD.) 06 March 2012 (2012-03-06)<br>See entire document. | 1-14 |
| A | KR 10-2009-0027332 A (KOREA ELECTROTECHNOLOGY RESEARCH INSTITUTE) 17 March 2009 (2009-03-17)<br>See entire document. | 1-14 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016801**

| Patent document cited in search report | | | Publication date (day/month/year) | Patent family member(s) | | | Publication date (day/month/year) |
|---|---|---|---|---|---|---|---|
| KR | 10-2010-0008786 | A | 26 January 2010 | CN | 101348243 | A | 21 January 2009 |
| | | | | CN | 101348243 | B | 06 April 2011 |
| | | | | EP | 2137779 | A1 | 30 December 2009 |
| | | | | JP | 2010-529593 | A | 26 August 2010 |
| | | | | US | 2009-0023069 | A1 | 22 January 2009 |
| | | | | US | 8075861 | B2 | 13 December 2011 |
| | | | | WO | 2009-012669 | A1 | 29 January 2009 |
| KR | 10-2012-0019426 | A | 06 March 2012 | AU | 2010-265710 | A1 | 29 December 2010 |
| | | | | AU | 2010-265710 | B2 | 22 November 2012 |
| | | | | CA | 2738365 | A1 | 29 December 2010 |
| | | | | CA | 2738365 | C | 09 December 2014 |
| | | | | CN | 101580238 | A | 18 November 2009 |
| | | | | CN | 101580238 | B | 20 April 2011 |
| | | | | EP | 2368843 | A1 | 28 September 2011 |
| | | | | EP | 2368843 | B1 | 25 May 2016 |
| | | | | JP | 2012-530025 | A | 29 November 2012 |
| | | | | JP | 5458171 | B2 | 02 April 2014 |
| | | | | US | 2011-0206989 | A1 | 25 August 2011 |
| | | | | US | 8815338 | B2 | 26 August 2014 |
| | | | | WO | 2010-148638 | A1 | 29 December 2010 |
| KR | 10-2009-0027332 | A | 17 March 2009 | KR | 10-0972054 | B1 | 23 July 2010 |

Form PCT/ISA/210 (patent family annex) (July 2022)